# EUROPÄISCHE PATENTSCHRIFT

(11) **EP 0 944 159 B1**
(45) Veröffentlichungstag und Bekanntmachung des Hinweises auf die Patenterteilung: **21.06.2006**
(21) Anmeldenummer: 99105437.0
(22) Anmeldetag: 17.03.1999
(51) Int. Cl.: H02M 3/156, G01R 19/00, G05F 1/46

(54) **Gleichspannungswandler**
DC-DC converter
Convertisseur de courant continu

(30) Priorität: 20.03.1998 DE 19812299
(43) Veröffentlichungstag der Anmeldung: 22.09.1999
(73) Patentinhaber: Micronas GmbH, 79108 Freiburg i. Br. (DE)
(72) Erfinder: Greitschus, Norbert Dr.-Ing., 79346 Endingen (DE)
(74) Vertreter: Hornig, Leonore

(56) Entgegenhaltungen:
- EP-A- 0 451 870
- US-A- 5 646 520
- US-A- 5 723 974

## Beschreibung

Die Erfindung betrifft einen Gleichspannungswandler mit einem Schalttransistor, einer Drosselinduktivität, einer Glättungskapazität und einem Schaltelement, welche so geschaltet sind, daß eine Eingangsspannung in eine Ausgangsspannung, welche größer oder kleiner als die Eingangsspannung ist, umgewandelt wird. Ein solcher Gleichspannungswandler ist aus der US 5,723,974 bekannt.

Femer ist ein solcher Gleichspannungswandler aus "Analoge Schaltungen", M. Seifert, VEB Verlag Technik Berlin, 1987, S. 540 ff. bekannt. Der Gleichspannungswandler kann als ein Up-Konverter, bei welchem die Ausgangsspannung größer als die Eingangsspannung ist, oder als ein Down-Konverter, bei dem die Ausgangsspannung kleiner als die Eingangsspannung ist, ausgebildet sein. Mit einem solchen Gleichspannungswandler wird ein hoher Wirkungsgrad erzielt. Durch das Tastverhältnis des Schalttransistors wird das Verhältnis von der Ausgangsspannung zur Eingangsspannung bestimmt.

Die Drosselinduktivität dient als Energiespeicher bei dem Spannungswandler. Sie wird in der Regel aus einer Spule mit Ferritmaterial aufgebaut. Bei einem solchen Gleichspannungswandler ist der Drosselstrom der Drosselinduktivität eine Funktion des Laststromes. Wenn der Drosselstrom einen bestimmten Wert übersteigt, verliert das Ferritmaterial sehr schnell seine Permeabilität, da die Drosselinduktivität in die Sättigung gerät, wodurch ein weiterer Stromanstieg bedingt wird, der zu einer Zerstörung der Schaltung oder Teilen davon führen kann.

Aus der EP 0 451 870 ist ein Schaltkreis zum Erzeugen von Referenzspannungen bekannt. Aus einer festen Spannung werden mehrere Referenzspannungen abgeleitet. Die Referenzspannung ist weitgehend unabhängig von äußeren Parametern, wie Temperatur, dem Prozeß, der Versorgungsanordnung.

Aus Datenblatt MAX 731, MAXIM Integrated Products , Sunnyvale, CA, USA, ist ein Gleichspannungswandler bekannt, bei dem der Drosselstrom über einen Meßwiderstand, welcher mit dem Schalttransistor in Reihe geschaltet ist, gemessen wird. Dadurch kann ein unerwünschter Anstieg des Drosselstromes gemessen und eine Zerstörung von Schaltungsteilen verhindert werden.

Diese Anordnung hat jedoch den Nachteil, daß der Meßwiderstand groß sein muß, um einen genügend großen Spannungsabfall für eine genaue Strommessung zu erzeugen. Der Wirkungsgrad des Gleichspannungswandlers wird erniedrigt, da der Widerstand des Schalttransistors im eingeschalteten Zustand durch den Meßwiderstand erhöht wird. Unter diesem Gesichtspunkt wäre ein Meßwiderstand von Null wünschenswert.

Der Erfindung liegt die Aufgabe zugrunde, einen Gleichspannungswandler zu schaffen, bei dem der Drosselstrom der Drosselinduktivität überwacht werden kann, ohne daß der Wirkungsgrad des Gleichspannungswandlers beeinträchtigt wird.

Diese Aufgabe wird durch einen gattungsgemäßen Gleichspannungswandler mit den Merkmalen des Patentanspruchs 1 gelöst.

Mit dieser Anordnung kann der Drosselstrom der Drosselinduktivität gemessen werden, ohne daß ein zusätzlicher Meßwiderstand benötigt wird. Somit wird der Wirkungsgrad des Gleichspannungswandlers nicht reduziert. Da der Schalttransistor im eingeschalteten Zustand in seinem Widerstandsbereich bzw. Triodenbereich betrieben wird, kann der Drosselstrom der Drosselinduktivität über den Spannungsabfall an dem Schalttransistor gemessen werden. Bei der erfindungsgemäßen Schaltung wird der Spannungsabfall über dem Schalttransistor mit dem Spannungsabfall über dem Referenztransistor verglichen. Letzterer Spannungsabfall entsteht dadurch, daß der Referenzstrom der Referenzstromquelle durch den Referenztransistor fließt. Dadurch wird die Schaltschwelle des Komparators festgelegt. Sie wird so gewählt, daß der zulässige Maximalstrom durch die Drosselinduktivität bzw. den Schalttransistor festgestellt wird. Wenn der maximal zulässige Strom über dem Schalttransistor erreicht wird, wird die Spannung an dem ersten Eingang des Komparators gleich der Spannung an dem zweiten Eingang des Komparators. Bei diesem und bei einem weiter ansteigenden Strom schaltet der Komparator in seinen anderen Zustand um. Somit wird an dem Komparatorausgang festgestellt, wenn der Strom in dem Gleichspannungswandler den zulässigen Maximalwert überschreitet.

Dadurch dass der Schalttransistor und der Referenztransistor MOS-Transistoren sind, der Referenztransistor im Triodenzustand betrieben wird, und das Verhältnis von der Gate/Source-Spannung des Referenztransistors zu der Gate/Source-Spannung des Referenztransistors im leitenden Zustand des Schalttransistors konstant ist. Hierdurch wird gewährleistet, daß der Referenztransistor vergleichbaren Bedingungen wie der Schalttransistor unterliegt, wodurch der Strom durch den Schalttransistor zuverlässiger bestimmt werden kann. Es ist günstig, wenn das Verhältnis von Gate/Source-Spannungen der beiden Transistoren gleich 1 ist. Günstigerweise weist der Referenztransistor ein kleineres w/l (Breiten/Längen)-Verhältnis als der Schalttransistor auf. Durch das w/l-Verhältnis der Transistoren wird deren Dimensionierung festgelegt. Durch das kleinere w/l-Verhältnis des Referenztransistors wird ein kleinerer Referenzstrom benötigt als der Strom durch den Schalttransistor. Hierdurch wird ein unnötig hoher Strom in der Referenzschaltung vermieden.

Vorteilhafterweise wird das Ausgangssignal des Komparators einer Regelschaltung zur Regelung des Tastverhältnisses des Schalttransistors zugeführt. Somit greift das Ausgangssignal des Komparators in die Regelung des Gleichspannungswandlers ein. Wenn der Strom durch den Schalttransistor den vorgegebenen Maximalwert überschreitet, wird das Tastverhältnis des Schalttransistors so geändert, daß sich die Ausgangsspannung und somit auch der Strom durch den Gleichspannungswandler ändert.

Gemäß einem weiteren Ausführungsbeispiel der Erfindung umfaßt der Referenztransistor mehrere in Reihe geschaltete gleiche Transistoren, deren Gate-Elektroden mit einem gemeinsamen, festem Potential verbunden sind. Bei einem Up Konverter kann das feste Potential die Betriebsspannung, bei einem Down-Konverter die Masse sein. Bei dieser Anordnung wird zum Erreichen einer vorgegebenen Referenzspannung für den zweiten Eingang des Komparators der Referenzstrom um den Faktor der Anzahl der Transistoren erniedrigt. Man erhält somit eine hohe Referenzspannung. Da die Spannungsabfälle an den einzelnen Transistoren gering sind, kann der dadurch hervorgerufene Back-Bias-Effekt der Transistoren vernachlässigt werden.

Gemäß einem anderen Ausführungsbeispiel der Erfindung ist zwischen dem ersten Eingang des Komparators und dem Schalttransistor ein erstes Hilfsschaltelement zum Trennen des Komparatoreingangs von dem Schalttransistor während des ausgeschalteten Zustandes des Schalttransistors vorgesehen. Durch das Hilfsschaltelement wird ein zu großes Übersteuern des Komparators verhindert, wenn der Schalttransistor ausgeschaltet wird. Durch das Hilfsschaltelement wird die Leitung von dem Schalttransistor zu dem Eingang des Komparators getrennt. Als Hilfsschaltelement kann ein Transistor verwendet werden. Es kann ein zweites Hilfsschaltelement zwischen dem ersten Eingang des Komparators und einem festen elektrischen Potential vorgesehen sein. Hierdurch wird, wenn die Leitung zwischen dem Schalttransistor und dem Komparator durch das erste Hilfsschaltelement unterbrochen wird, der erste Eingang des Komparators auf einem festen elektrischen Potential gehalten. Eine undefinierte Spannung des Komparatoreingang wird so verhindert. Bei einem Up-Konverter wird der erste Eingang des Komparators bevorzugt nach Masse und bei einem Down-Konverter bevorzugt auf die Betriebsspannung geschaltet. Mittels des ersten und zweiten Hilfsschaltlements wird also ein zyklisches Übersteuern des Komparatoreingangs verhindert.

Die Referenzstromquelle kann so ausgebildet sein, daß sie von außen einstellbar ist. Es kann dabei der Referenzstrom digital, d.h. stufenweise, oder analog, beispielsweise mittels eines Potentiometers, eingestellt werden.

Der Komparator kann eine vorgegebene Offset-Spannung aufweisen. Hierdurch kann die Schaltschwelle des Komparators weiter verschoben werden. Es kann die Referenzspannung erhöht werden, ohne daß zu viele Transistoren zum Bilden des Meßtransistors verwendet werden und ohne daß der Referenzstrom vergrößert wird. Der Komparator kann mit einer Hysterese, also als Schmitt-Trigger, ausgebildet werden.

Auch ist es vorteilhaft, wenn die Anordnung monolithisch integriert ist. Die Referenztransistoren können dann in der Nähe des Schalttransistors angeordnet werden, so daß die beiden Transistoren vergleichbaren Bedingungen unterliegen und keine Matching-Probleme aufgrund eines zu großen räumlichen Abstandes, Maskierungsunterschieden, Unterschieden in der Implementierung, in der Temperatur und ähnlichem auftreten.

Im folgenden werden die Figuren anhand der Zeichnung näher erläutert.
Die Fig.1 bis 4 zeigen unterschiedliche Ausführungsbeispiele des erfindungsgemäßen Gleichspannungswandler als Up-Konverter und
Fig. 5 ein Ausführungsbeispiel des Gleichspannungswandlers als Down-Konverter.

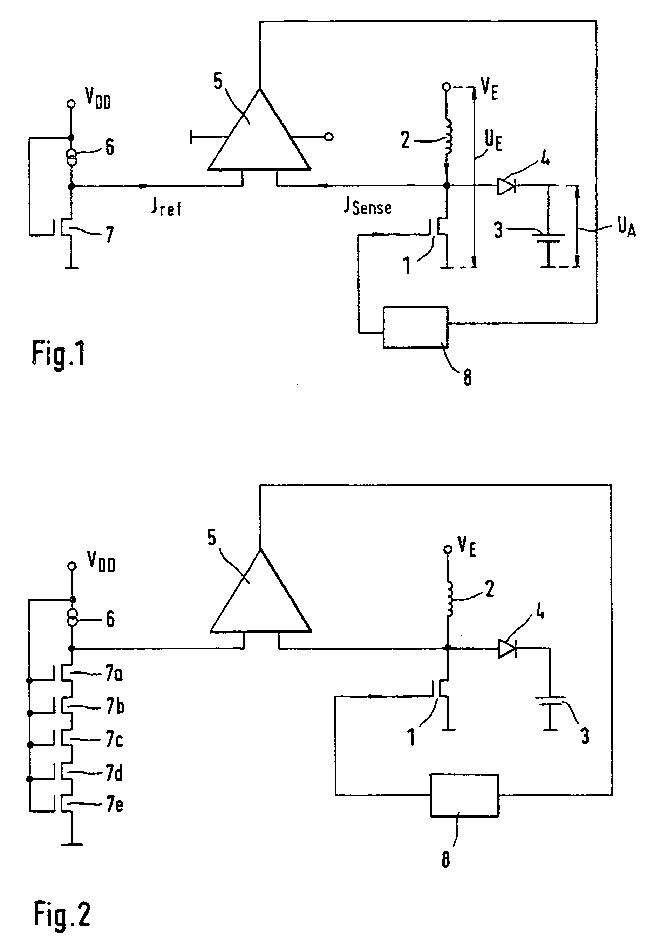

In Fig. 1 ist ein erstes Ausführungsbeispiel des Gleichspannungswandlers als Up-Konverter gezeigt. Er dient dazu, eine Eingangsspannung U_{E} in eine Ausgangsspannung U_{A} umzuwandeln, welche größer als die Eingangsspannung U_{E} ist. Der Gleichspannungswandler umfaßt einen Schalttransistor 1, eine Drosselinduktivität 2, eine Glättungskapazität 3 und ein Schaltelement 4, welches aus einer Diode gebildet ist. Als Schalttransistor 1 wird hier ein n-Kanal MOS-Transistor verwendet. Es können in dieser Schaltung jedoch auch prinzipiell Bipolartransistoren statt MOS-Transistoren verwendet werden. Die Eingangsspannung wird an die in Reihe geschaltete Drosselinduktivität 2 und den Schalttransistor 1 so angelegt, daß der Source-Anschluß des Schalttransistors 1 an Masse liegt. Die Glättungskapazität 3 und das Schaltelement 4 sind parallel zu der Source-Drain Richtung des Schalttransistors 1 geschaltet. Die Schaltung ist so ausgelegt, daß der Strom der Drosselinduktivität 2 im eingeschalteten Zustand des Schaltelements 1 gemessen werden kann. Der Schalttransistor 1 wird in seinem eingeschalteten Zustand im linearen Bereich, d.h. im Triodenzustand, betrieben. Daher ist der Spannungsabfall über dem Schalttransistor 1 nahezu proportional zum Drosselstrom durch die Drosselinduktivität 2. Der Spannungsabfall über dem Schalttransistor 1 wird dem ersten Eingang eines Komparators 5 zugeführt. Dem anderen Eingang des Komparators 5 wird eine Referenzspannung zugeführt. Diese wird dadurch erzeugt, daß ein Referenzstrom einer Referenzstromquelle 6 einem Referenztransistor 7 zugeführt wird. Der Referenztransistor 7 ist ebenfalls ein n-Kanal-MOS-Transistor, der in seinem linearen Bereich, d.h. dem Triodenzustand, betrieben wird. Das Verhältnis der Gate-Source-Spannung des Schalttransistors 1 zu der Gate-Source-Spannung des Referenztransistors 7 ist im leitenden Zustand der Transistoren konstant. Der Referenztransistor 7 ist prinzipiell wie der Schalttransistor 1 aufgebaut. Er kann jedoch ein kleineres w/l (Längen/Breiten)-Verhältnis als der Schalttransistor 1 besitzen. Er kann somit mit einem Referenzstrom, der wesentlich kleiner ist als der Drosselstrom der Drosselinduktivität 2 den gleichen Spannungsabfall erzeugen wie der Spannungsabfall am ersten Eingang des Komparators 5. Die Referenzstromquelle 6 und der Referenztransistor 7 werden so gewählt, daß eine vorgegebene Referenzspannung erzeugt wird, die der durch den maximal zulässigen Drosselstrom durch die Drosselinduktivität 2 entstehenden Spannung an dem Schalttransistor entspricht. Wenn der Drosselstrom durch die Drosselinduktivität 2 den vorgegebenen Strom übersteigt, steigt die Spannung an dem ersten Eingang des Komparators 5 über die Referenzspannung an dem zweiten Eingang des Komparators 5. Dadurch ändert sich der Zustand des Ausgangssignals des Komparators 5. Somit wird aufgrund des Ausgangssignals des Komparators 5 erkannt, daß der Drosselstrom durch die Drosselinduktivität 2 einen vorgegebenen Wert übersteigt.

Im gezeigten Ausführungsbeispiel wird das Ausgangssignal des Komparators 5 auf eine Regeleinheit 8 gegeben, mittels der die Gate-Elektrode des Schalttransistors 1 angesteuert wird. Mit der Regeleinheit 8 kann das Tastverhältnis des Schalttransistors 1 direkt geregelt werden. Da durch das Tastverhältnis das Verhältnis von der Ausgangsspannung U_{A} zu der Eingangsspannung U_{E} festgelegt ist, kann dadurch bei einer sich ändernden Eingangsspannung die Ausgangsspannung entsprechend nachgeregelt werden. Einem Anstieg des Drosselstroms durch die Drosselinduktivität 2 kann durch die Regelung des Tastverhältnisses entsprechend entgegengewirkt werden. Bei einem zu hohen Drosselstrom durch die Drosselinduktivität wird aufgrund des Ausgangssignals des Komparators 5 das Tastverhältnis des Schalttransistors 1 reduziert, wodurch sich die Ausgangsspannung und dadurch der Drosselstrom verringert.

Bei dieser Schaltung ist kein zusätzlicher Meßwiderstand nötig, um den Strom über dem Schalttransistor nachweisen zu können. Es wird somit der Wirkungsgrad des Gleichspannungswandlers erhalten. Die gesamte Anordnung der Fig. 1 kann auf einem Halbleiter, insbesondere auf einem Siliziumsubstrat integriert sein. Der Referenztransistor 7 wird räumlich in der Nähe des Schalttransistors 1 angeordnet, da er dann vergleichbaren Bedingungen unterliegt. Es werden somit Temperatureinflüsse sowie Einflüsse durch den Herstellungsprozeß, wie ungleiche Implementierung, Maskenausrichtungsprozesse etc. verhindert.

Fig. 2 zeigt ein weiteres Ausführungsbeispiel des Gleichspannungswandlers, der als Up-Konverter ausgebildet ist. Gleiche Teile werden mit gleichen Bezugszeichen bezeichnet wie in dem Ausführungsbeispiel der Fig. 1. Da die Funktionsweise der des Ausführungsbeispiels der Fig. 1 entspricht, wird im folgenden nur auf die Unterschiede eingegangen. Hier ist der Referenztransistor aus mehreren in Reihe geschalteten gleichen Transistoren 7a, 7b, 7c, 7d, 7e gebildet. Die Gate-Elektroden dieser Transistoren sind mit einem gemeinsamen, festen Potential, der Betriebsspannung verbunden. Auf diese Weise kann eine wesentlich höhere Referenzspannung zum Vergleich mit der Spannung am ersten Eingang des Komparators 5 erzeugt werden, ohne daß ein großer Referenzstrom erzeugt werden muß. Durch die Reihenschaltung der Transistoren 7a, 7b, 7c, 7d, 7e kann ein großer Spannungsabfall detektiert werden, ohne daß in den einzelnen Transistoren ein hoher Spannungsabfall erzeugt wird.

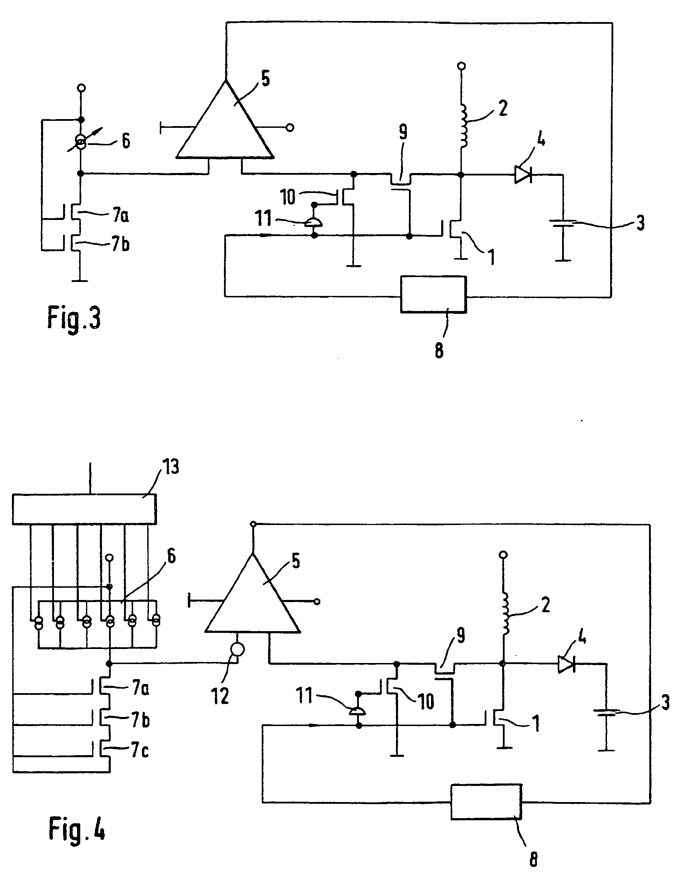

In dem Ausführungsbeispiel der Fig. 3 wird der Referenztransistor aus zwei Transistoren 7a, 7b gebildet. Der Referenzstrom der Referenzstromquelle 6 ist variabel. Es kann ein externer Strom, als Referenzstrom eingeprägt werden. Die Stromquelle ist analog, beispielsweise mittels eines Potentiometers, einstellbar.

Zwischen dem ersten Eingang des Komparators 5 und dem Schalttransistor 1 ist ein erstes Hilfsschaltelement 9 geschaltet, welches den Komparatoreingang von dem Schalttransistor 1 während des ausgeschalteten Zustandes des Schalttransistors 1 trennt. Das erste Hilfsschaltelement 9 besteht ebenfalls aus einem n-Kanal-MOS-Transistor. Es verhindert eine Übersteuerung des Komparators 5, wenn der Schalttransistor 1 in den nichtleitenden Zustand geschaltet wird. Da das erste Hilfsschaltelement 9 die Leitung von dem Schalttransistor 1 zu dem Komparator 5 trennt, gelangt keine erhöhte Spannung an den ersten Eingang des Komparators. Zwischen dem ersten Eingang des Komparators 5 und einem festen elektrischen Potential ist ein zweites Hilfsschaltelement 10 vorgesehen, welches den ersten Eingang während des ausgeschalteten Zustandes des Schalttransistors 1 auf dem festen Potential hält. Das zweite Hilfsschaltelement 10 ist ebenfalls hier als n-Kanal-MOS-Transistor ausgebildet. Es bewirkt, daß, wenn die Leitung von dem zweiten Hilfsschaltelement 9 zu dem Komparator 5 von dem Schalttransistor 1 abgetrennt wird, ein festes Potential an dem ersten Eingang des Komparators 5 anliegt. Es wird somit ein "Floaten" der Spannung an dem ersten Komparatoreingang verhindert. Hier wird der erste Komparatoreingang auf Masse gelegt. Das Gate des zweiten Hilfsschaltelements 10, ist über einen Inverter 11 mit dem Taktsignal des Schalttransistors 1 verbunden. Dadurch wird bewirkt, daß das 2. Hilfsschaltelement 10 geschlossen wird, wenn das erste Hilfsschaltelement 9 und der Schalttransistor 1 gesteuert wird.

In Fig. 4 ist ein Ausführungsbeispiel gezeigt, bei dem die Schaltung an dem ersten Komparatoreingang der entsprechenden Schaltung aus der Fig. 3 gleich ist. Hierauf wird nicht näher eingegangen. Die Referenzstromquelle 6 ist in diesem Ausführungsbeispiel digital einstellbar. Das digitale Register 13 der Referenzstromquelle 6 kann beispielsweise über ein digitales Interface eingestellt werden. Der Referenztransistor umfaßt Transistoren 7a, 7b, 7c. Der Komparator 5 ist mit einer Offsetspannung 12 versehen. Hierdurch kann die Referenzspannung weiter erhöht werden, ohne daß der Referenztransistor 7 weitere Transistoren umfassen muß und ohne daß ein hoher Referenzstrom durch den Referenztransistor 7 fließen muß.

In dem gezeigten Ausführungsbeispiel ist der Komparator 5 ein Spannungskomparator.

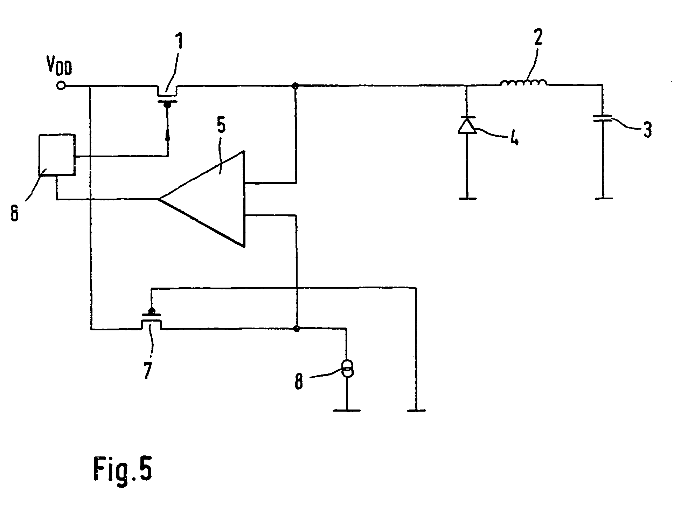

Fig. 5 zeigt ein Ausführungsbeispiel des Gleichspannungswandlers als Down-Konverter. Das Prinzip der Stromüberwachung entspricht der Fig. 1. Die gleichen Elemente sind mit den gleichen Bezugszeichen versehen und haben die gleiche Wirkungsweise. Anstelle von n-Kanal-MOS-Transistoren werden p-Kanal-MOS-Transistoren für den Schalttransistor 1 und den Referenztransistor 7 verwendet. Der Anschluß von Masse und Betriebsspannung V_{DD} ist entsprechend vertauscht. Die Änderung des Referenztransistors 7, der Referenzstromquelle 6 und das Einfügen der Hilfsschaltelemente 9 und 10 kann in Analogie zu den Ausführungen für Fig. 2 bis 4 erfolgen.

## Patentansprüche

1. Gleichspannungswandler
mit einem Schalttransistor (1), einer Drosselinduktivität (2), einer Glättungskapazität (3) und einem Schaltelement (4), welche so geschaltet sind, daß eine Eingangsspannung U_{E} in eine Ausgangsspannung U_{A}, welche größer oder kleiner als die Eingangsspannung ist, umgewandelt wird,
**dadurch gekennzeichnet, daß** ein Komparator (5) vorgesehen ist, dessen erster Eingang mit dem Schalttransistor (1) verbunden ist, und dessen zweiter Eingang mit einem Referenztransistor (7) und einer Referenzstromquelle (6) so verbunden ist, daß eine vorgegebene Schaltschwelle des Komparators (5) am zweiten Eingang festgelegt wird, wobei der Schalttransistor (1) und der Referenztransistor (7) MOS-Transistoren sind, der Referenztransistor (7) im Triodenzustand betrieben wird, und das Verhältnis von der Gate/Source-Spannung des Schalttransistors zu der Gate/Source-Spannung des Referenztransistors (7) im leitenden Zustand des Schalttransistors (1) konstant ist.

2. Gleichspannungswandler nach Anspruch 1, **dadurch gekennzeichnet, daß** der Referenztransistor (7) ein kleineres Breiten/Längen (w/l) - Verhältnis als der Schalttransistor (1) aufweist.

3. Gleichspannungswandler nach einem der vorangehenden Ansprüche, **dadurch gekennzeichnet, daß** das Ausgangssignal des Komparators (5) einer Regeleinheit (8) zur Regelung des Tastverhältnisses des Schalttransistors (1) zugeführt wird.

4. Gleichspannungswandler nach einem der vorangehenden Ansprüche, **dadurch gekennzeichnet, daß** der Referenztransistor (7) mehrere in Reihe geschaltete gleiche Transistoren (7a, 7b, 7c, 7d, 7e) umfaßt, deren Gatelektroden mit einem gemeinsamen, festen Potential verbunden sind.

5. Gleichspannungswandler nach einem der vorangehenden Ansprüche, **dadurch gekennzeichnet, daß** zwischen dem ersten Eingang des Komparators (5) und dem Schalttransistor (1) ein erstes Hilfsschaltelement (9), zum Trennen des Komparatoreingangs von dem Schalttransistor während des ausgeschalteten Zustandes des Schalttransistors (1) vorgesehen ist.

6. Gleichspannungswandler nach einem der vorangehenden Ansprüche, **dadurch gekennzeichnet, daß** ein zweites Hilfsschaltelement (10) zwischen dem ersten Eingang des Komparators (5) und einem festen elektrischen Potential vorgesehen ist, um den ersten Eingang während des ausgeschalteten Zustandes des Schalttransistors (1) auf dem festen Potential zu halten.

7. Gleichspannungswandler nach einem der vorangehenden Ansprüche, **dadurch gekennzeichnet, daß** die Referenzstromquelle (16) von außen einstellbar ist.

8. Gleichspannungswandler nach einem der vorangehenden Ansprüche, **dadurch gekennzeichnet, daß** der Komparator (5) eine vorgegebene Offsetspannung aufweist.

9. Gleichspannungswandler nach einem der vorangehenden Ansprüche, **dadurch gekennzeichnet, daß** der Komparator (5) mit einer Hysterese ausgebildet ist.

10. Gleichspannungswandler nach einem der vorangehenden Ansprüche, **dadurch gekennzeichnet, daß** die Anordnung monolithisch integriert ist.

## Claims

1. A DC/DC converter comprising a switching transistor (1), an inductor (2), a smoothing capacitor (3), and a switching element (4) which are connected so as to convert an input voltage U_{E} to an output voltage U_{A} greater or less than the input voltage,
**characterized in that** a comparator (5) is provided having a first input connected to the switching transistor (1), and a second input connected to a reference transistor (7) and a reference current source (6) so as to fix a predetermined switching threshold of the comparator (5) at the second input, wherein the switching transistor (1) and the reference transistor (7) are MOS transistors, the reference transistor (7) is operated in a triode region, and, in the on state of the switching transistor (1), the ratio of the gate-source voltage of the switching transistor to the gate-source voltage of the reference transistor (7) is constant.

2. A DC/DC converter as claimed in claim 1, **characterized in that** the reference transistor (7) has a smaller w/l ratio than the switching transistor (1).

3. A DC/DC converter as claimed in either of the preceding claims, **characterized in that** the output signal of the comparator (5) is fed to a control unit (8) for controlling the duty cycle of the switching transistor (1) .

4. A DC/DC converter as claimed in any one of the preceding claims, **characterized in that** the reference transistor (7) comprises several series-connected, like transistors (7a, 7b, 7c, 7d, 7e) whose gates are tied to a common, fixed potential.

5. A DC/DC converter as claimed in any one of the preceding claims, **characterized in that** a first auxiliary switching element (9) is provided between the first input of the comparator (5) and the switching transistor (1) for separating the comparator input from the switching transistor (1) during the off state of the switching transistor.

6. A DC/DC converter as claimed in any one of the preceding claims, **characterized in that** a second auxiliary switching element (10) is provided between the first input of the comparator (5) and a fixed potential for holding the first input at the fixed potential during the off state of the switching transistor (1).

7. A DC/DC converter as claimed in any one of the preceding claims, **characterized in that** the reference current source (16) is adjustable from outside.

8. A DC/DC converter as claimed in any one of the preceding claims, **characterized in that** the comparator (5) has a predetermined offset voltage.

9. A DC/DC converter as claimed in any one of the preceding claims, **characterized in that** the comparator (5) exhibits hysteresis.

10. A DC/DC converter as claimed in any one of the preceding claims, **characterized in that** the arrangement is implemented using monolithic integrated circuit technology.

## Revendications

1. Transformateur de courant continu comprenant un transistor de commutation (1), une bobine d'induction (2), un condensateur de lissage (3) et un élément de commutation (4), qui sont connectés de telle façon qu'une tension d'entrée U_{E} est transformée en une tension de sortie U_{A}, qui est ou supérieure ou inférieure à la tension d'entrée,
**caractérisé en ce que** l'on prévoit un comparateur (5) dont la première entrée est reliée à un transistor de commutation (1) et dont la deuxième entrée est liée à un transistor de référence (7) et à une source de courant de référence (6) de telle façon qu'un seuil prédéterminé de commutation du comparateur (5) soit établi à la deuxième entrée, dans lequel le transistor de commutation (1) et le transistor de référence (7) sont des transistors MOS, on utilise le transistor de référence (7) en mode triode, et le rapport de la tension porte/source du transistor de commutation sur la tension porte/source du transistor de référence (7) en mode passant du transistor de commutation (1) est constant.

2. Transformateur de courant continu selon la revendication 1 **caractérisé en ce que** le transistor de référence (7) présente un rapport largeur /longueur (w/l) plus petit que celui du transistor de commutation (1).

3. Transformateur de courant continu selon l'une quelconque des revendications précédentes **caractérisé en ce que** le signal de sortie du comparateur (5) est amené à une unité de régulation (8) pour la régulation du taux d'utilisation du transistor de commutation (1).

4. Transformateur de courant continu selon l'une quelconque des revendications précédentes **caractérisé en ce que** le transistor de référence (7) comprend plusieurs transistors identiques (7a, 7b, 7c, 7d, 7e), connectés en série, dont les électrodes de porte sont reliées à un potentiel fixe commun.

5. Transformateur de courant continu selon l'une quelconque des revendications précédentes **caractérisé en ce que**, entre la première entrée du comparateur (5) et le transistor de commutation (1), on prévoit un élément de commutation auxiliaire (9) pour séparer l'entrée du comparateur du transistor de commutation lorsque le transistor de commutation (1) est en mode non passant.

6. Transformateur de courant continu selon l'une quelconque des revendications précédentes **caractérisé en ce que** l'on prévoit un deuxième élément de commutation auxiliaire (10) entre la première entrée du comparateur et un potentiel électrique fixe, afin de maintenir la première entrée à ce potentiel fixe lorsque le transistor de commutation (1) est en mode non passant.

7. Transformateur de courant continu selon l'une quelconque des revendications précédentes **caractérisé en ce que** la source de courant de référence (6) est réglable de l'extérieur.

8. Transformateur de courant continu selon l'une quelconque des revendications précédentes, **caractérisé en ce que** le comparateur (5) présente un décalage de tension prédéterminé.

9. Transformateur de courant continu selon l'une quelconque des revendications précédentes, **caractérisé en ce que** le comparateur (5) est conçu avec une hystérésis.

10. Transformateur de courant continu selon l'une quelconque des revendications précédentes, **caractérisé en ce que** l'agencement est intégré de façon monolithique.
